# FASCICULE DE BREVET EUROPEEN

(11) **EP 3 109 952 B1**
(45) Date de publication et mention de la délivrance du brevet: **13.09.2017**
(21) Numéro de dépôt: 16175833.9
(22) Date de dépôt: 22.06.2016
(51) Int. Cl.: H01R 13/514, H01R 25/00, H01R 25/16, H02G 3/12, H01R 27/02, H02G 3/10

(54) **CONTENANT POUR BLOC MULTI-APPAREILLAGE ET BLOC MULTI-APPAREILLAGE**
BEHÄLTER FÜR EINEN MULTIGERÄTEBLOCK, UND ENTSPRECHENDER MULTIGERÄTEBLOCK
CONTAINER FOR MULTI-APPARATUS UNIT AND MULTI-APPARATUS UNIT

(30) Priorité: 22.06.2015 FR 1555706
(43) Date de publication de la demande: 28.12.2016
(73) Titulaire: Legrand France, 87000 Limoges (FR); Legrand SNC, 87000 Limoges (FR)
(72) Inventeur: PERRIGNON de TROYES, François, 72100 Le Mans (FR)
(74) Mandataire: Orsini, Fabienne

(56) Documents cités:
- EP-A1- 0 149 377
- WO-A1-2012/068595
- WO-A2-2009/015041
- DE-C1- 3 643 105
- GB-A- 2 229 869
- US-A- 3 927 698

## Description

### DOMAINE TECHNIQUE AUQUEL SE RAPPORTE L'INVENTION

La présente invention concerne, de manière générale, les appareillages électriques pour l'environnement tertiaire, en particulier les appareillages électriques utilisés à un poste de travail bureautique.

Elle concerne plus particulièrement un contenant allongé pour bloc multi-appareillages électriques et/ou électroniques, comprenant une ouverture longitudinale dans laquelle sont destinés à être implantés des modules d'appareillage, cette ouverture longitudinale étant délimitée par deux bords longitudinaux en vis-à-vis pourvus de moyens de montage desdits modules d'appareillage.

Elle concerne également un bloc multi-appareillages comprenant un tel contenant supportant divers modules d'appareillages électriques et/ou électroniques, à poser ou à fixer sur un bureau ou sur une quelconque surface support.

### ARRIERE PLAN TECHNOLOGIQUE

La plupart des contenants des blocs multi-appareillages connus sont des boîtiers allongés comprenant un profilé monobloc de section en U définissant un fond à partir duquel s'élèvent deux parois latérales longitudinales. Les deux extrémités d'un tel profilé sont équipées d'embouts de fermeture et sa face avant peut être localement obturée par un tronçon de couvercle.

Les documents EP2806717, EP2065986, EP2027635, ES1061247, EP0668637 et FR2652682 illustrent par exemple des blocs multi-appareillages comprenant un tel contenant.

L'utilisation d'un profilé monobloc pour réaliser un boîtier de bloc multi-appareillages impose de respecter une géométrie très contraignante afin de pouvoir être fabriqué à une cadence élevée industrielle. En outre, les profilés monoblocs ne facilitent pas l'accès du câble aux points de connexion électrique ou informatique situés à l'intérieur du boîtier. Il est souvent difficile avec un profilé monobloc de respecter les rayons de courbure autorisés pour le câble d'alimentation.

On connaît par ailleurs, notamment des documents WO2009/015041 et DE3643105, des agencements ouverts pour le montage de divers appareillages électriques, comportant des longerons séparés, assemblés entre eux par des étriers. Mais ces agencements ouverts connus ne permettent pas d'obtenir un volume de montage desdits appareillages maximal pour un encombrement externe optimisé.

### OBJET DE L'INVENTION

Afin de remédier aux inconvénients précités, selon l'invention, il est proposé un contenant pour bloc multi-appareillages tel que défini dans la revendication 1.

L'agencement ouvert du contenant selon l'invention facilite la production du contenant qui peut être plus précise et plus rapide.

Grâce à cet agencement ouvert, il est très aisé de câbler les modules d'appareillage montés sur les bords longitudinaux desdits longerons, en respectant les rayons de courbure autorisés pour le câble.

En outre, les dispositions d'assemblage des étriers aux corps des longerons du contenant conforme à l'invention, sont particulièrement robustes et adaptées de sorte qu'une fois assemblés aux longerons, les étriers ne gênent en rien le montage desdits modules d'appareillage dans le contenant, et ce dernier comporte un volume de montage maximal pour un encombrement externe optimisé.

Enfin, le contenant selon l'invention peut être réalisé facilement selon diverses formes personnalisées à la demande.

D'autres caractéristiques non limitatives et avantageuses du contenant conforme à l'invention sont énoncées dans les revendications 2 à 14.

L'invention propose également un bloc multi-appareillages électriques et/ou électroniques comprenant un contenant conforme à l'invention dans lequel sont implantés divers modules d'appareillage électrique et/ou électronique dont les faces avant fonctionnelles juxtaposées suivant l'axe longitudinal dudit contenant, forment la face avant dudit bloc.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective de dessous d'un bloc multi-appareillages selon l'invention ;
- la figure 2 est une vue schématique en perspective éclatée du bloc multi-appareillages de la figure 1 ;
- la figure 3 est une vue schématique en perspective de dessus du contenant selon l'invention du bloc multi-appareillages de la figure 2, recevant divers modules d'appareillage électrique ;
- la figure 4 est une vue schématique en perspective de trois-quart du contenant selon l'invention du bloc multi-appareillages de la figure 2 ;
- la figure 5 est une vue en loupe de la zone A de la figure 4 ;
- la figure 6 est une vue en coupe selon le plan B-B du contenant de la figure 4 ;
- la figure 7 est une vue en bout d'un longeron du contenant de la figure 4 ;
- la figure 8 est une vue schématique en perspective d'un étrier du contenant de la figure 4 ; et
- la figure 9 est une vue de profil de l'étrier de la figure 8.

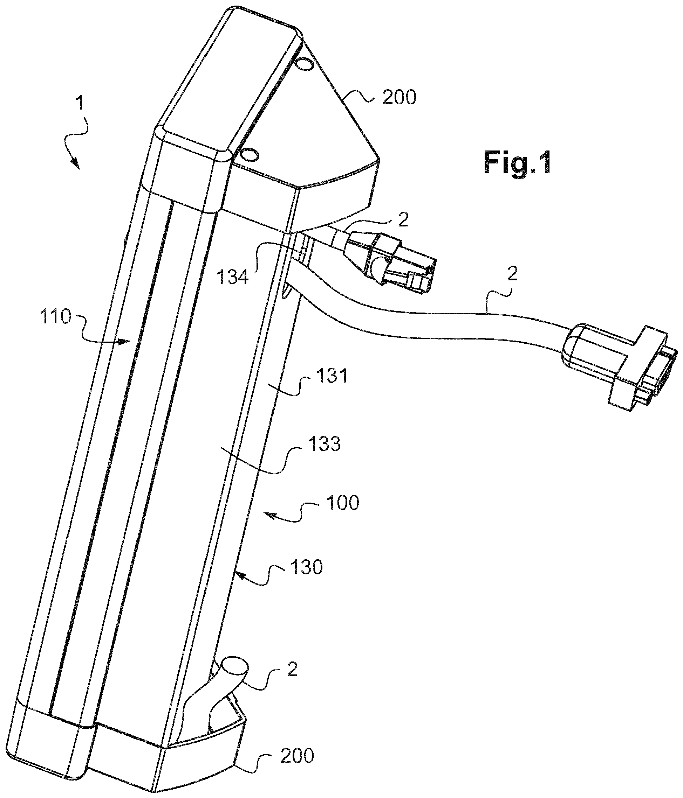

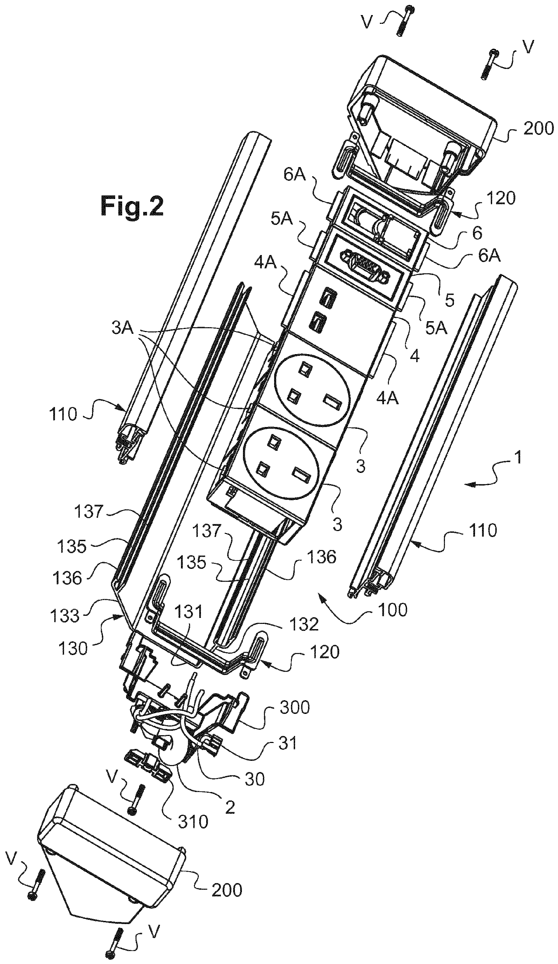

Sur les figures 1 et 2, on a représenté un bloc 1 multi-appareillages électriques et/ou électroniques destiné à être posé ou fixé sur un support non représenté tel que par exemple le plan ou le pied d'un bureau d'un poste de travail.

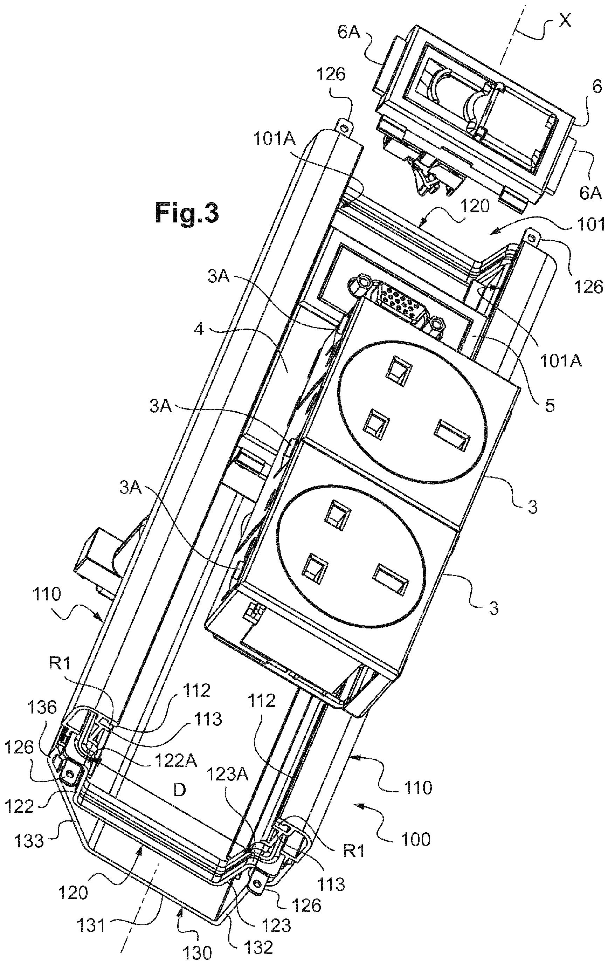

Comme le montrent plus particulièrement les figures 2 et 3, ce bloc 1 comprend un contenant 100 dans lequel sont implantés divers modules d'appareillage électrique 3, 4, 5, 6 dont les faces avant fonctionnelles juxtaposées suivant l'axe longitudinal X dudit contenant 100, forment la face avant dudit bloc 1 accessible à l'usager.

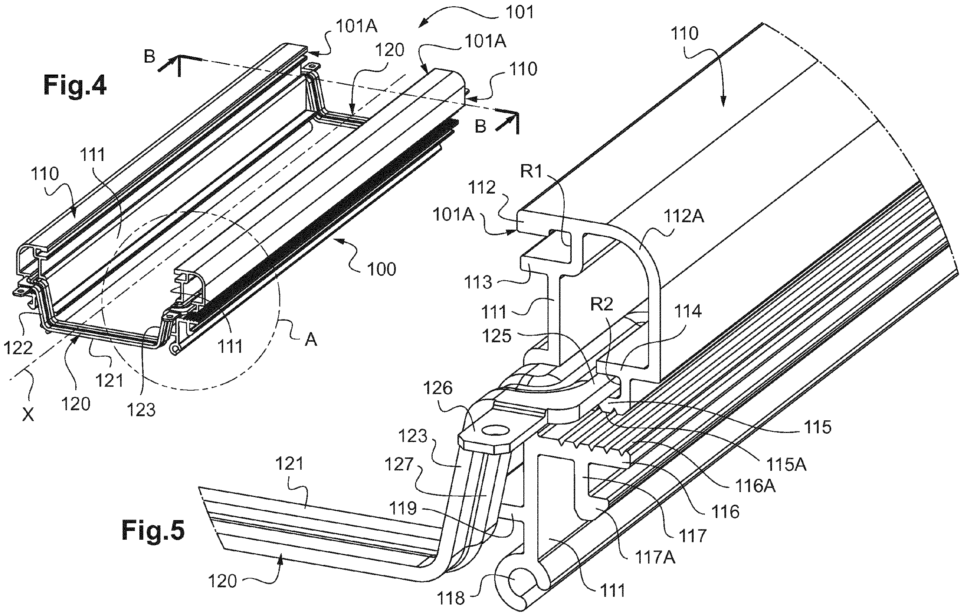

Comme le montrent les figures 3 et 4, le contenant 100 allongé suivant un axe longitudinal X comprend une ouverture longitudinale 101 d'accueil desdits modules d'appareillage 3, 4, 5, 6. Cette ouverture longitudinale 101 est délimitée par deux bords longitudinaux 101A en vis-à-vis pourvus de moyens de montage 112, 113 desdits modules d'appareillage 3, 4, 5, 6.

Selon une caractéristique remarquable, le contenant 100 comprend quatre pièces séparées assemblées entre elles, dont deux longerons 110 profilés présentant chacun un bord longitudinal 101A pourvu desdits moyens de montage 112, 113 desdits modules d'appareillage 3, 4, 5, 6, et deux étriers 120 pourvus de moyens d'assemblage mécanique 124, 125 coopérant avec des moyens d'assemblage mécanique complémentaires R2 prévus aux extrémités desdits longerons 110, chaque étrier 120 étant attaché aux deux longerons 110 pour placer en vis-à-vis, à une largeur D fixe déterminée, lesdits bords longitudinaux 101A desdits longerons 110 (voir figures 2, 3, 4).

Comme le montre plus particulièrement la figure 3, cette largeur D fixe d'écartement desdits bords longitudinaux 101A desdits longerons 110, correspond à la hauteur de la face avant fonctionnelle de chaque module d'appareillage 3, 4, 5, 6, si bien que lorsque ces modules 3, 4, 5, 6 sont montés sur lesdits moyens de montage desdits longerons 110, leur face avant fonctionnelle s'étend d'un bord longitudinal 101A à l'autre desdits longerons 110.

Chaque étrier 120 est avantageusement réalisé d'une seule pièce par découpage, formage et pliage d'un feuillard en matière métallique. Il peut également être constitué d'une âme métallique surmoulée d'une matière plastique.

Chaque étrier 120 comporte des parties 124, 125 engagées à force dans ouvertures d'extrémité de rainures R2 longitudinales des longerons 110 de sorte qu'elles sont coincées à l'intérieur desdites rainures R2 (voir les figures 3 et 5).

Cet assemblage d'étrier aux longerons est très avantageusement robuste.

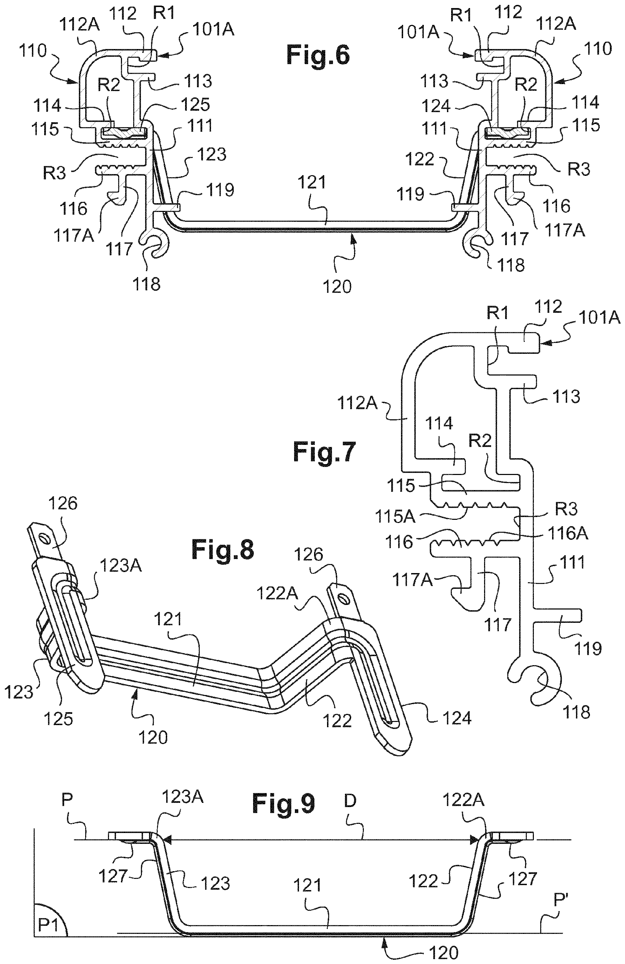

Comme le montrent plus particulièrement les figures 8 et 9, chaque étrier 120 présente trois branches 121, 122, 123 plates qui forment globalement un U avec une branche 121 de base à partir de laquelle s'étendent deux branches 122, 123 latérales. Les branches 122, 123 latérales s'étendent dans des directions légèrement divergentes l'une par rapport à l'autre dans un plan moyen P1 perpendiculaire au plan moyen P' de la branche 121 de base.

Les extrémités 122A, 123A des branches 122, 123 latérales de chaque étrier 120 sont pourvues desdites parties 124, 125 formant lesdits moyens d'assemblage mécanique de chaque étrier 120.

Les extrémités 122A, 123A desdites branches 122, 123 latérales de chaque étrier 120 sont espacées d'une distance D correspondant à la largeur D fixe déterminée d'écartement des bords longitudinaux des longerons 110, et lesdites parties formant lesdits moyens d'assemblage mécanique de chaque étrier 120 sont ici des languettes 124, 125 qui s'étendent à partir desdites branches 122, 123, en porte-à-faux de celles-ci, dans un plan moyen P globalement parallèle au plan moyen P' dans lequel s'étend la branche 121 de base dudit étrier 120 (voir les figures 3 et 9).

Un bossage 127 court au centre d'une face de chaque étrier 120, d'une extrémité à l'autre dudit étrier, le long desdites languettes 124, 125, des branches 122, 123 latérales et de la branche 121 de base (voir figures 8 et 9) de l'étrier 120, si bien, qu'en particulier, chaque languette 124, 125 de l'étrier 120 présente une section transversale en forme de vague (voir figure 6).

Le bossage 127 apporte notamment une certaine rigidité aux étriers 120.

En correspondance de la forme desdites languettes 124, 125, comme le montre la figure 6, les rainures R2 des longerons 110 présentent une section rectangulaire dont les dimensions intérieures correspondent au gabarit externe desdites languettes 124, 125 des étriers 120 de sorte que celles-ci doivent être engagées à force dans lesdites rainures R2. Le bossage 127 central desdites languettes 124, 125 s'appuie contre une face des rainures R2 tandis que la face opposée au bossage desdites languettes 124, 125 s'appuie contre l'autre face opposée des rainures R2 pour retenir par friction les languettes 124, 125 dans lesdites rainures R2.

Comme le montrent les figures 3, 4, 5 et 6, chaque étrier 120 étant assemblé aux longerons 110, les deux branches 122, 123 latérales de chaque étrier 120 s'étendent globalement le long de la hauteur desdits longerons 110, tandis que la branche 121 de base de chaque étrier 120 s'étend, entre les deux longerons 110, au travers de l'ouverture longitudinale 101 du contenant 100. Avantageusement, les étriers 120 sont situés à l'extérieur du volume de montage desdits modules d'appareillage, défini entre les longerons 110 en vis-à-vis. Les étriers 120 ne gênent alors en rien le montage desdits modules d'appareillage et le contenant conforme à l'invention comporte un volume de montage maximal pour un encombrement externe optimisé.

Selon une autre caractéristique avantageuse, ici, chaque étrier 120 comprend au dos des moyens d'assemblage mécanique 124, 125, un moyen d'accostage 126 d'une cosse de connexion 31 d'un conducteur électrique 30 équipotentiel (voir figure 2).

Ici, il s'agit d'une patte 126 plate, rectangulaire, qui s'étend dans le prolongement de chaque languette 124, 125.

Lorsque chaque languette 124, 125 de l'étrier 120 est engagée dans la rainure R2 correspondante de chaque longeron 110, chaque patte 126, située au dos de chaque languette 124, 125, forme une saillie accessible à l'installateur pour y accoster une cosse de connexion 31 d'un conducteur électrique 30 équipotentiel (voir les figures 2, 3 et 5). Chaque patte 126 présente des dimensions appropriées de sorte qu'une cosse de connexion 31 classique (représentée sur la figure 2) liée à l'âme métallique du conducteur électrique 30 équipotentiel peut être enfilée sur cette patte 126 de manière à établir un contact électrique entre ledit conducteur électrique 30 équipotentiel, raccordé par ailleurs à la borne de terre d'un module d'appareillage implanté dans le contenant 100, et l'étrier 120 correspondant.

Cette disposition permet avantageusement de relier à la terre le contenant 100 du bloc 1 multi-appareillages.

Comme le montrent plus particulièrement les figures 4 à 7, chaque longeron 110 est réalisé d'une seule pièce par exemple en une matière métallique comme un alliage d'aluminium.

Chaque longeron 110 comporte un corps 111 avec un côté interne destiné à être tourné vers l'autre longeron 110 et, à l'opposé, un côté externe. Comme le montrent les figures 3, 4 et 6, entre les deux côtés internes des longerons 110 placés en vis-à-vis, est défini un volume de montage des modules d'appareillage 3. Le corps 111 de chaque longeron 110 comporte sur son côté interne différents aménagements en vue du montage de divers modules d'appareillage dans ce volume de montage.

Plus particulièrement, en tête (c'est-à-dire au niveau de la face avant du bloc 1), le corps 111 de chaque longeron 110 porte, sur son côté interne, une première bande 112 longitudinale et une deuxième bande 113 longitudinale qui s'étendent en parallèle, perpendiculairement audit corps 111. Les faces en regard de ces deux bandes 112, 113 délimitent deux côtés d'une rainure R1 longitudinale s'ouvrant suivant une direction perpendiculaire audit corps 111. La rainure R1 de chaque longeron 110 est également ouverte à chaque extrémité dudit longeron 110.

Cette rainure R1 est apte à accueillir des nervures latérales 4A, 5A, 6A des modules d'appareillage 4, 5, 6. A partir d'une extrémité desdits longerons 110, les nervures latérales 4A, 5A, 6A des modules d'appareillage 4, 5, 6 peuvent être coulissées dans les rainures R1 des longerons 110 maintenus à distance l'un de l'autre par les étriers 120, pour implanter lesdits modules d'appareillage 4, 5, 6 dans l'ouverture longitudinale 101 du contenant 100 dudit bloc 1.

En outre, la bande 113 est une bande de clipsage sous laquelle sont destinées à s'accrocher des dents d'encliquetage 3A des modules d'appareillage 3 implantés par encliquetage dans l'ouverture longitudinale 101 du contenant 100 du bloc 1.

Les bandes 112, 113 des longerons 110 du contenant 100 forment, à ce titre, les deux bords longitudinaux 101A qui délimitent l'ouverture longitudinale 101 du contenant 100 et qui sont pourvus des moyens de montage desdits modules d'appareillage 3, 4, 5, 6.

En outre, le corps 111 de chaque longeron 110 porte, à proximité de son pied (à l'opposé des bandes 112, 113), sur son côté interne, une bande 119 longitudinale qui s'étend parallèlement à ladite bande de clipsage 113 (voir les figures 6 et 7).

Cette bande 119 sert d'appui pour le fond des socles des modules d'appareillage 3.

Le corps 111 de chaque longeron 110 comporte, en pied, un fourreau 118 qui s'étend sur toute la longueur du longeron 110. Chaque fourreau 118 est ouvert à chaque extrémité dudit longeron 110 et il est ici ouvert longitudinalement (figures 5, 6 et 7). Comme le montre la figure 2, les fourreaux 118 accueillent des vis V auto-taraudeuses pour le montage sur les longerons 110 d'embouts 200 fermant latéralement les deux extrémités du contenant 100 du bloc 1 multi-appareillages.

Sur son côté externe, le corps 111 de chaque longeron 110 comporte un galbe esthétique 112A et des agencements 114, 115, formant une première rainure R2 longitudinale, s'ouvrant suivant une direction parallèle audit corps 111. Cette rainure R2, déjà détaillée plus haut, est ouverte aux deux extrémités des longerons 110. De façon particulièrement avantageuse, comme le montrent les figures 3, 4, 5 et 6, les premières rainures R2 prévues sur les côtés externes des corps 111 des longerons 110, accueillent, à leurs extrémités, les moyens d'assemblage mécanique 124,125 des étriers 120 de sorte que les étriers 120, assemblés auxdits longerons 110, sont fixés de manière robuste aux corps desdits longerons et sont situés à l'extérieur du volume de montage desdits modules d'appareillage, défini entre les deux côtés internes des corps 111 des longerons 110 en vis-à-vis. Les étriers 120 ne gênent alors en rien le montage desdits modules d'appareillage et le contenant conforme à l'invention comporte un volume de montage maximal pour un encombrement externe optimisé.

Des agencements 115, 116 externes du corps 111 de chaque longeron 110 forment une deuxième rainure R3 longitudinale, interposée entre la première rainure R2 longitudinale et une patte 117 longitudinale portant sur son bord libre longitudinal une dent d'encliquetage 117A. Chaque deuxième rainure R3 longitudinale s'ouvre sur un côté latéral du contenant 100 suivant une direction perpendiculaire au corps 111 du longeron 110 correspondant. Chaque deuxième rainure R3 présente des surfaces crantées 115A, 116A en regard l'une de l'autre et elle est destinée à recevoir des vis (non représentées) pour l'ajout, sur les côtés latéraux du bloc 1, d'accessoires de fixation du bloc 1 (comme une pince ou une plaque) à un plan de travail ou à un poteau ou à tout autre élément d'un poste de travail tertiaire.

Selon le mode de réalisation du bloc 1 multi-appareillages représenté sur les figures 1 à 3, il est prévu un conduit profilé 130 qui forme le fond dudit contenant 100. Ledit conduit profilé 130 comporte une paroi de fond 131 à partir duquel s'élèvent deux parois latérales longitudinales 132, 133. Chaque paroi latérale longitudinale 132, 133 porte à son extrémité libre deux bandes longitudinales 136, 137 définissant intérieurement une gorge avec un rebord d'accrochage 135 sur lequel s'accroche la dent d'encliquetage 117A prévue sur le bord libre longitudinal de la patte 117 prévue sur le côté externe du corps 111 de chacun des longerons 110 (voir figure 3).

Le conduit profilé 130 est réalisé par extrusion d'une matière métallique ou synthétique.

En fonction du type de bloc 1 multi-appareillages, la paroi de fond 131 du conduit profilé 130 peut être entièrement fermée ou partiellement ouverte par une découpe en U par exemple.

Lorsque le bloc est un bloc « courant fort » qui ne contient que des modules d'appareillage électrique alimentés par un courant fort, la paroi de fond dudit conduit profilé est entièrement fermée et le câble d'alimentation desdits modules d'appareillage est introduit à l'intérieur du bloc entre le bord du conduit profilé et l'embout d'extrémité correspondant du bloc.

Lorsque le bloc 1 est un bloc mixte « courants fort et faible » comme cela est représenté sur la figure 1, la paroi de fond 131 du conduit profilé 130 du bloc 1 est avantageusement ouverte par une découpe 134 en U située à une extrémité du bloc 1. Les câbles 2 d'alimentation en courant faible entrent dans le bloc 1 via cette ouverture 134, en étant tout droits et sans contrainte. A l'extrémité opposée du bloc 1, le câble 2 d'alimentation en courant fort s'introduit dans le bloc 1 en passant entre le bord du conduit profilé 130 et l'embout 200 d'extrémité correspondant du bloc 1 (voir figure 1). Dans ce cas, une cloison isolante (non visible sur les figures) est préférentiellement montée à l'intérieur du contenant 100 pour isoler les modules d'appareillage 3 « courant fort » des modules d'appareillage 4, 5, 6 « courant faible » et éviter qu'un usager n'accède aux modules « courant fort » par l'ouverture 134 de la paroi de fond 131 du conduit profilé 130.

Une pièce isolante 300 de maintien de câble 2, est montée à l'intérieur du contenant 100, à une extrémité de celui-ci, du côté « courant fort », en étant coincée entre les bandes de clispage 113 et les bandes d'appui 119 desdits longerons 110.

Le câble 2 d'alimentation en courant fort est maintenu sur cette pièce isolante 300 par l'intermédiaire d'une bride 310 serrée par une vis V. Cette pièce isolante 300 reprend ainsi les efforts de flexion et de traction exercés sur le câble 2.

Le bloc 1 multi-appareillages décrit ci-dessus et conforme à l'invention présente notamment les avantages suivants.

Il est facilement réalisable, à faible coût, à la longueur souhaitée grâce à la fabrication aisée des diverses pièces profilées séparées.

En particulier, l'agencement ouvert du contenant 100 facilite la production qui peut être plus précise et plus rapide.

Grâce à cet agencement ouvert, il est très aisé de câbler les modules d'appareillage 3, 4, 5, 6 montés sur les bords longitudinaux 101A desdits longerons 110, en respectant les rayons de courbure autorisés pour les câbles.

La présente invention n'est nullement limitée au mode de réalisation décrit et représenté, mais par les revendications ci-jointes.

## Revendications

1. Contenant (100) allongé pour bloc multi-appareillages électriques et/ou électroniques, comprenant une ouverture longitudinale (101) dans laquelle sont destinés à être implantés des modules d'appareillage (3, 4, 5, 6), cette ouverture longitudinale (101) étant délimitée par deux bords longitudinaux (101A) en vis-à-vis pourvus de moyens de montage desdits modules d'appareillage, contenant (100) comportant quatre pièces séparées assemblées entre elles, dont deux longerons (110) profilés présentant chacun un corps (111) qui porte, sur un côté interne, en tête, un bord longitudinal (101A) pourvu desdits moyens de montage (112,113) desdits modules d'appareillage, et deux étriers (120) pourvus de moyens d'assemblage mécanique (124,125) coopérant avec des moyens d'assemblage mécanique complémentaires (R2) prévus aux extrémités desdits longerons (110), chaque étrier (120) étant attaché aux deux longerons (110) pour placer en vis-à-vis, à une largeur (D) fixe déterminée, lesdits bords longitudinaux (101A) desdits longerons (110), **caractérisé en ce que** le corps (111) de chaque longeron (110) comprend sur un autre côté externe, opposé audit côté interne, des agencements (114,115) formant une première rainure (R2), lesdites premières rainures (R2) accueillant lesdits moyens d'assemblage mécanique (124,125) des étriers (120) de sorte que les étriers (120), assemblés auxdits longerons (110), sont situés à l'extérieur du volume de montage desdits modules d'appareillage, défini entre les deux côtés internes des corps (111) des longerons (110) en vis-à-vis.

2. Contenant (100) selon la revendication 1, dans lequel chaque étrier (120) comporte des parties (124, 125) engagées à force dans lesdites premières rainures (R2) des longerons (110) de sorte qu'elles sont coincées à l'intérieur desdites rainures (R2).

3. Contenant (100) selon la revendication 2, dans lequel lesdites parties sont des languettes (124,125) pourvues sur une face d'un bossage (127) de sorte qu'elles présentent une section transversale en forme de vague.

4. Contenant (100) selon l'une des revendications 1 à 3, dans lequel chaque étrier (120) présente trois branches (121, 122, 123) qui forment globalement un U avec une branche (121) de base à partir de laquelle s'étendent deux branches (122,123) latérales dont les extrémités libres (122A, 123A) sont pourvues desdits moyens d'assemblage mécanique (124, 125).

5. Contenant (100) selon la revendication 4, dans lequel les deux branches (122, 123) latérales de chaque étrier (120) assemblé aux longerons (110), s'étendent globalement le long de la hauteur desdits longerons (110), tandis que la branche (121) de base de chaque étrier (120) s'étend, entre les deux longerons (110), au travers de ladite ouverture longitudinale (101).

6. Contenant (100) selon l'une des revendications 1 à 5, dans lequel chaque étrier (120) est réalisé d'une seule pièce par découpage, formage et pliage d'un feuillard en matière métallique.

7. Contenant (100) selon la revendication 6, dans lequel au moins un étrier (120) comprend au dos des moyens d'assemblage mécanique, un moyen d'accostage (126) d'une cosse de connexion (31) d'un conducteur électrique (30).

8. Contenant (100) selon l'une des revendications précédentes, dans lequel le corps (111) de chaque longeron (110) porte, d'une part, sur ledit côté interne, en tête, une bande de clipsage (113) qui s'étend perpendiculairement audit corps (111) et qui délimite un côté d'une rainure (R1) longitudinale s'ouvrant suivant une direction perpendiculaire audit corps (111), et, d'autre part, sur l'autre côté externe opposé, ladite première rainure (R2) longitudinale s'ouvre suivant une direction parallèle audit corps (111).

9. Contenant (100) selon la revendication précédente, dans lequel le corps (111) de chaque longeron (110) comporte, en pied, un fourreau (118) qui s'étend sur toute la longueur du longeron et qui est ouvert à chaque extrémité dudit longeron, les fourreaux (118) accueillant des vis (V) de montage d'embouts (200) fermant les deux extrémités dudit contenant.

10. Contenant (100) selon l'une des revendications 8 et 9, dans lequel le corps (111) de chaque longeron (110) porte, à proximité de son pied, sur son côté interne, une bande (119) d'appui qui s'étend parallèlement à ladite bande de clipsage (113).

11. Contenant (100) selon l'une des revendications 8 à 10, dans lequel le corps (111) de chaque longeron (110) comporte sur son côté externe des moyens de montage sur lesquels sont engagés des moyens de montages complémentaires d'un conduit profilé (130) qui forme le fond dudit contenant.

12. Contenant (100) selon la revendication précédente, dans lequel ledit conduit profilé (130) comporte une paroi de fond (131) à partir de laquelle s'élèvent deux parois latérales longitudinales (132, 133), chaque paroi latérale longitudinale (132, 133) portant à son extrémité libre une gorge dans laquelle s'accroche une dent d'encliquetage (117A) prévue sur un bord libre longitudinal d'une patte longitudinale (117) prévue sur le côté externe du corps (111) d'un longeron (110).

13. Contenant (100) selon la revendication précédente, dans lequel le corps (111) de chaque longeron (110) comporte sur son côté externe, une deuxième rainure (R3) longitudinale, interposée entre la première rainure (R2) longitudinale et la patte longitudinale (117) portant ladite dent d'encliquetage (117A), cette deuxième rainure (R3) longitudinale s'ouvrant vers l'extérieur du contenant suivant une direction perpendiculaire audit corps (111).

14. Contenant (100) selon la revendication 8, dans lequel chaque longeron (110) est réalisé d'une seule pièce en une matière métallique.

15. Bloc (1) multi-appareillages électriques et/ou électroniques comprenant un contenant (100) selon l'une des revendications 1 à 14 dans lequel sont implantés divers modules d'appareillage électrique et/ou électronique (3, 4, 5, 6) dont les faces avant fonctionnelles juxtaposées suivant l'axe longitudinal dudit contenant forment la face avant dudit bloc (1).

## Patentansprüche

1. Länglicher Behälter (100) für einen Block von mehreren elektrischen und/oder elektronischen Geräten, mit einer längs gerichteten Öffnung (101), in die Gerätemodule (3, 4, 5, 6) eingesetzt werden sollen, wobei die längs gerichtete Öffnung (101) durch zwei einander gegenüberliegende Längsränder (101A) begrenzt ist, die mit Mitteln für die Montage der Gerätemodule versehen sind, wobei der Behälter (100) vier einzelne, miteinander verbundene Teile aufweist, und zwar zwei Längsholme mit Profil (110), von denen jedes einen Körper (111) aufweist, der auf einer inneren Seite am Kopfende einen längs gerichteten, mit den Mitteln (112, 113) für die Montage der Gerätemodule versehenen Rand (101A) aufweist, und zwei Bügel (120), die mit Mitteln (124, 125) zum mechanischen Verbinden versehen sind, die mit an den Enden der Längsträger (110) vorgesehenen komplementären Mitteln (R2) zum mechanischen Verbinden zusammenwirken, wobei jeder Bügel (120) mit den beiden Längsholmen (110) verbunden ist, um die Längsränder (101A) der Längsholme (110) in einer vorbestimmten festen Breite (D) einander gegenüber anzuordnen, **dadurch gekennzeichnet, daß** der Körper (111) jedes Längsholms (110) auf einer anderen, der inneren Seite gegenüberliegenden äußeren Seite eine erste Rille (R2) bildende Anordnungen (114, 115) aufweist, wobei die ersten Rillen (R2) die Mittel 124, 125) zum mechanischen Verbinden der Bügel (120) aufnehmen, so daß die mit den Längsholmen (110) verbundenen Bügel (120) außerhalb des zwischen den beiden inneren Seiten der Körper (111) der einander gegenüberliegenden Längsholme (110) definierten Einbauvolumens der Gerätemodule liegen.

2. Behälter (100) gemäß Anspruch 1, bei dem jeder Bügel (120) Teile (124, 125) aufweist, die in die ersten Rillen (R2) des Längsholms (110) hinein gepreßt sind, um im Inneren der Rillen (R2) verklemmt zu sein.

3. Behälter (100) gemäß Anspruch 2, bei dem die Teile auf einer Seite mit einer Ausbeulung (127) versehene Zungen (124, 125) sind, so daß sie einen wellenförmigen Querschnitt aufweisen.

4. Behälter (100) gemäß einem der Ansprüche 1 bis 3, bei dem jeder Bügel (120) drei Schenkel (121, 122, 123) aufweist, die insgesamt ein U mit einem Basisschenkel (121) bilden, von dem aus sich zwei Seitenschenkel (122, 123) erstrecken, deren freie Enden (122A, 123A) mit den Mitteln (124, 125) zum mechanischen Verbinden versehen sind.

5. Behälter (100) gemäß Anspruch 4, bei dem sich die beiden Seitenschenkel (122, 123) jedes mit den Längsholmen (110) verbundenen Bügels (120) insgesamt entlang der Höhe der Längsholme (110) erstrecken, während sich der Basisschenkel (121) jedes Bügels (120) zwischen den beiden Längsholmen (110) quer über die längs gerichtete Öffnung (101) erstreckt.

6. Behälter (100) gemäß einem der Ansprüche 1 bis 5, bei dem jeder Bügel (120) in einem Stück durch Abschneiden, Formen und Umbiegen eines Blatts aus einem metallenen Material hergestellt ist.

7. Behälter (100) gemäß Anspruch 6, bei dem wenigstens ein Bügel (120) auf dem Rücken Mittel zum mechanischen Verbinden, ein Mittel zum Anschließen einer Verbindungslasche (31) eines elektrischen Leiters (30) aufweist.

8. Behälter (100) gemäß einem der vorangehenden Ansprüche, bei dem der Körper (111) jedes Längsholms (110) einerseits auf der inneren Seite am Kopfende ein Schnappband (113) trägt, das sich senkrecht zum Körper (111) erstreckt und eine Seite einer längs gerichteten Rille (R1) begrenzt, die in einer zum Körper (111) senkrechten Richtung offen ist, und andererseits auf der anderen, entgegengesetzten äußeren Seite die erste längs gerichtete Rille (R2) in einer zum Körper (111) parallelen Richtung offen ist.

9. Behälter (100) gemäß dem vorangehenden Anspruch, bei dem der Körper (111) jedes Längsholms (110) am Fußende eine Hülle (118) aufweist, die sich über die gesamte Länge des Längsholms erstreckt und an jedem Ende des Längsholms offen ist, wobei die Hüllen (118) Schrauben (V) zum Befestigen von die beiden Enden des Behälters abschließenden Endstücken (200) aufnehmen.

10. Behälter (100) gemäß einem der Ansprüche 8 und 9, bei dem der Körper (111) jedes Längsholms (110) in der Nähe von dessen Fußende, auf dessen innerer Seite, ein Andruckband (119) aufweist, das sich parallel zum Schnappband (113) erstreckt.

11. Behälter (100) gemäß einem der Ansprüche 8 bis 10, bei dem der Körper (111) jedes Längsholms (110) auf dessen äußerer Seite Montagemittel aufweist, die mit zusätzlichen Montagemitteln eines Rohrs mit Profil (130), das den Boden des Behälters bildet, in Eingriff stehen.

12. Behälter (100) gemäß dem vorangehenden Anspruch, bei dem das Rohr mit Profil (130) eine Bodenwand (131) aufweist, von der zwei längs gerichtete Seitenwände (132, 133) ausgehen, wobei jede längs gerichtete Seitenwand (132, 133) an deren freiem Ende eine Kehle aufweist, in der sich ein an einem längs gerichteten freien Rand einer auf der äußeren Seite des Körpers (111) eines Längsholms (110) vorgesehenen längs gerichteten Lasche (117) vorgesehener Schnappzahn (117A) festklammert.

13. Behälter (100) gemäß dem vorangehenden Anspruch, bei dem der Körper (111) jedes Längsholms (110) auf seiner äußeren Seite eine zweite längs gerichtete Rille (R3) aufweist, die zwischen der ersten längs gerichteten Rille (R2) und der den Schnappzahn (117A) tragenden längs gerichteten Lasche (117) eingefügt ist, wobei die zweite längs gerichtete Rille (R3) nach außerhalb des Behälters in einer zum Körper (111) senkrechten Richtung offen ist.

14. Behälter (100) gemäß Anspruch 8, bei dem jeder Längsholm (110) in einem Stück aus einem metallenen Material gefertigt ist.

15. Block (1) von mehreren elektrischen und/oder elektronischen Geräten, der einen Behälter (100) gemäß einem der Ansprüche 1 bis 14 aufweist, in den verschiedene elektrische und/oder elektronische Gerätemodule (3, 4, 5, 6) eingesetzt sind, deren entlang einer Längsachse des Behälters aneinandergereihte funktionsmäßige Vorderfronten die Vorderfront des Blocks (1) bilden.

## Claims

1. An elongate container (100) for an electrical and/or electronic multi-accessory block, the container including a longitudinal opening (101) in which accessory modules (3, 4, 5, 6) are to be implanted, the longitudinal opening (101) being defined by two facing longitudinal edges (101A) that are provided with mounting means for mounting said accessory modules, the container (100) comprising four separate pieces that are assembled together, namely two elongate members (110) each presenting a body (111) that, on its inner side, at its top, carries a longitudinal edge (101A) that is provided with said mounting means (112, 113) for mounting said accessory modules, and two brackets (120) that are provided with mechanical assembly means (124, 125) that co-operate with complementary mechanical assembly means (R2) that are provided at the ends of said elongate members (110), each bracket (120) being attached to the two elongate members (110) so as to position said longitudinal edges (101A) of said elongate members (110) facing each other at a determined fixed width (D), the container being **characterized in that**, on an outer other side, opposite from said inner side, the body (111) of each elongate member (110) includes arrangements (114, 115) that form respective first grooves (R2), said first grooves (R2) receiving said mechanical assembly means (124, 125) for assembling the brackets (120), such that the brackets (120), assembled to said elongate members (110), are situated outside the mounting volume for said accessory modules, defined between the two inner sides of the bodies (111) of the facing elongate members (110).

2. A container (100) according to claim 1, wherein each bracket (120) includes portions (124, 125) that are force-fitted into said first grooves (R2) of the elongate members (110), such that they are wedged inside said grooves (R2).

3. A container (100) according to claim 2, wherein said portions are tongues (124, 125) that, on one face, are provided with a bulge (127), such that they present a cross-section in the shape of a wave.

4. A container (100) according to any one of claims 1 to 3, wherein each bracket (120) presents three branches (121, 122, 123) that generally form a U-shape having a base branch (121) from which two side branches (122, 123) extend, and having free ends (122A, 123A) that are provided with said mechanical assembly means (124, 125).

5. A container (100) according to claim 4, wherein the two side branches (122, 123) of each bracket (120) assembled to the elongate members (110) generally extend along the height of said elongate members (110), while the base branch (121) of each bracket (120) extends between the two elongate members (110), through said longitudinal opening (101).

6. A container (100) according to any one of claims 1 to 5, wherein each bracket (120) is made as a single piece by cutting, forming, and bending a metal sheet.

7. A container (100) according to claim 6, wherein the rear of at least one bracket (120) includes mechanical assembly means, docking means (126) for docking a connection tab (31) of an electrical conductor (30).

8. A container (100) according to any preceding claim, wherein, firstly on said inner side, at its top, the body (111) of each elongate member (110) carries a clipping strip (113) that extends perpendicularly to said body (111) and that defines one side of a longitudinal groove (R1) that opens along a direction that is perpendicular to said body (111), and secondly on the opposite outer other side, said first longitudinal groove (R2) opens along a direction that is parallel to said body (111).

9. A container (100) according to the preceding claim, wherein, at its base, the body (111) of each elongate member (110) includes a sheath (118) that extends over the entire length of the elongate member and that is open at each end of said elongate member, the sheaths (118) receiving screws (V) for mounting endpieces (200) that close the two ends of said container.

10. A container (100) according to claim 8 or claim 9, wherein, in the proximity of its base, on its inner side, the body (111) of each elongate member (110) carries a bearing strip (119) that extends parallel to said clipping strip (113).

11. A container (100) according to any one of claims 8 to 10, wherein, on its outer side, the body (111) of each elongate member (110) includes mounting means on which there are engaged complementary mounting means of a channel section member (130) that forms the bottom of said container.

12. A container (100) according to the preceding claim, wherein said channel section member (130) comprises a web (131) from which two longitudinal flanges (132, 133) project, the free edge of each longitudinal flange (132, 133) carrying a groove in which a snap-fastener tooth (117A) catches, which snap-fastener tooth (117A) is provided on a longitudinal free edge of a longitudinal tab (117) that is provided on the outer side of the body (111) of an elongate member (110).

13. A container (100) according to the preceding claim, wherein the outer side of the body (111) of each elongate member (110) includes a second longitudinal groove (R3), interposed between the first longitudinal groove (R2) and the longitudinal tab (117) that carries said snap-fastener tooth (117A), the second longitudinal groove (R3) opening towards the outside of the container along a direction that is perpendicular to said body (111).

14. A container (100) according to claim 8, wherein each elongate member (110) is made as a single piece made out of metal.

15. An electrical and/or electronic multi-accessory block (1) including a container (100) according to any one of claims 1 to 14, wherein various electrical and/or electronic accessory modules (3, 4, 5, 6) are implanted, having functional front faces that are juxtaposed along the longitudinal axis of said container and that form the front face of said block (1).
